# EUROPÄISCHE PATENTSCHRIFT

(11) **EP 3 127 099 B1**
(45) Veröffentlichungstag und Bekanntmachung des Hinweises auf die Patenterteilung: **12.06.2019**
(21) Anmeldenummer: 15714200.1
(22) Anmeldetag: 31.03.2015
(51) Int. Cl.: G08C 17/02

(54) **ANZEIGEVORRICHTUNG MIT EINER DRAHTLOSEN SCHNITTSTELLE UND EINER SCHNITTSTELLE ZU EINEM BUS-SYSTEM EINES VERNETZTEN STEUERUNGSSYSTEMS**
DISPLAY DEVICE COMPRISING A WIRELESS INTERFACE AND AN INTERFACE TO A BUS SYSTEM OF A NETWORKED CONTROL SYSTEM
DISPOSITIF D'AFFICHAGE ÉQUIPÉ D'UNE INTERFACE SANS FIL ET D'UNE INTERFACE AVEC UN SYSTÈME DE BUS D'UN SYSTÈME DE COMMANDE EN RÉSEAU

(30) Priorität: 02.04.2014 DE 102014104657
(43) Veröffentlichungstag der Anmeldung: 08.02.2017
(73) Patentinhaber: Eaton Intelligent Power Limited, Dublin 4 (IE)
(72) Erfinder: REIDT, Georg, 53913 Swisstal (DE)
(74) Vertreter: Eaton IP Group EMEA
(86) Internationale Anmeldenummer: PCT/EP2015/057065
(87) Internationale Veröffentlichungsnummer: WO 2015/150402

(56) Entgegenhaltungen:
- DE-A1-102006 009 979
- DE-A1-102012 106 923
- US-A1- 2012 099 566
- US-A1- 2013 318 249
- US-A1- 2013 324 035

## Beschreibung

Die Erfindung betrifft eine Anzeigevorrichtung mit einer drahtlosen Schnittstelle und einer Schnittstelle zu einem Bus-System eines vernetzten Steuerungssystems.

Die deutsche Offenlegungsschrift DE 10 2006 009 979 A1 betrifft eine Einrichtung zur drahtlosen Kommunikation mit einem Feldgerät, das eine Schnittstelle zur drahtgebundenen Kommunikation in einem Automatisierungsnetzwerk, insbesondere nach dem HART- oder PROFIBUS-PA-Standard, aufweist. Um das Feldgerät auch drahtlos in das Automatisierungsnetzwerk einbinden zu können, ist ferner ein Funkmodul vorgesehen, das die drahtgebundene Kommunikation des Feldgeräts in eine drahtlose Kommunikation umsetzt.

Die deutsche Offenlegungsschrift DE 10 2006 017 243 A1 betrifft ein Sende-Empfangsgerät zur drahtlosen Übertragung eines Feldgerätesignals. Das Sende-Empfangsgerät weist eine Funkschnittstelle zum drahtlosen Kommunizieren und eine Feldgeräteschnittstelle zum Anschluss an ein Feldgerät oder zum Anschluss an ein Auswertegerät auf. Das Sende-Empfangsgerät ist dabei ausgebildet, ein Feldgerätesignal, also einen Messwert oder einen Steuerbefehl, zwischen der Funkschnittstelle und der Feldgeräteschnittstelle umzuwandeln.

Ein Feldgerät mit einer Anzeigevorrichtung zur Vor-Ort.-Visualisierung von Betriebszuständen eines automatisierten Prozesses ist aus dem deutschen Gebrauchsmuster DE 201 22 094 U1 bekannt. Die Anzeigevorrichtung weist ein Anzeigeelement von veränderbarem Erscheinungsbild auf. Das Anzeigeelement kann ein Leuchtmittel von einstellbarer Lichtfarbe zum Ausleuchten eines Anzeigehintergrunds aufweisen und auf ein Zustandsanzeigesignal dadurch reagieren, dass das Leuchtmittel den Anzeigehintergrund in einer Lichtfarbe ausleuchtet, die den durch das Zustandsanzeigesignal momentan repräsentierten Betriebszustand signalisiert.Aus der deutschen Offenlegungsschrift DE 10 2012 106 923 A1 ist eine Schaltvorrichtung mit Funkmodul und Deaktivierungsfunktion bekannt. Über das Funkmodul kann eine Information über den Betriebszustand der Schaltvorrichtung drahtlos abrufbar zur Verfügung gestellt werden. Am Funkmodul kann ein Anzeigeelement in Form einer sogenannten Multicolor-LED vorgesehen sein, deren Farbdarstellung in Abhängigkeit von einem Betriebsparameter des Schaltgeräts erfolgen kann.

Ein weiteres System ist zum Beispiel offenbart im Dokument US 2013/324035 A1.

Aufgabe der vorliegenden Erfindung ist es nun, eine Anzeigevorrichtung mit einer drahtlosen Schnittstelle vorzuschlagen, die zum Einsatz in einem vernetzten Steuerungssystem ausgebildet ist.

Diese Aufgabe wird durch die Gegenstände der unabhängigen Ansprüche gelöst. Weitere Ausgestaltungen der Erfindung sind Gegenstand der abhängigen Ansprüche.

Ein der vorliegenden Erfindung zugrunde liegender Gedanke besteht darin, eine Anzeigevorrichtung mit einer drahtlosen Schnittstelle zusätzlich mit einer Schnittstelle zu einem Bus-System eines vernetzten Steuerungssystems auszustatten, und die Anzeigevorrichtung als Bus-Slave in dem Bus-System zu konfigurieren. Mit einer derartigen Anzeigevorrichtung, die als Busteilnehmer in ein vernetztes Steuerungssystem integriert ist und von einem Bus-Master angesprochen werden kann, wird mit der drahtlosen Schnittstelle ein flexibler Zugangspunkt zum vernetzten Steuerungssystem geschaffen, der es ermöglicht, über insbesondere mobile Kommunikationsgeräte wie einem tragbaren Computer, einem Tablet-PC, einem Mobiltelefon, einem Smartphone, einem PDA (Personal Digital Assistant) oder einer Datenbrille den Betriebszustand von einem oder mehreren Busteilnehmern anzeigen zu können. Während das Mehrfarben-Anzeigeelement ermöglicht, insbesondere sehr wichtige und binäre Informationen von Busteilnehmern ohne zusätzliche technische Hilfsmittel anzuzeigen, insbesondere den kritischen Betriebszustand eines Busteilnehmers beispielsweise durch ein bestimmtes Farb- und / oder Blinkmuster entsprechend optisch zu signalisieren, erlaubt die drahtlose Schnittstelle die Bereitstellung zusätzlicher komplexer Informationen über Busteilnehmer, vor allem auch über größere Distanzen, insbesondere die Übertragung von dem kritischen Betriebszustand eines Busteilnehmers entsprechende Daten an ein zur Kommunikation mit der Anzeigevorrichtung konfiguriertes Gerät zur Auswertung und Anzeige auf dem Gerät. Weiterhin können über die drahtlose Schnittstelle Befehle von dem zur Kommunikation mit der Anzeigevorrichtung konfigurierten Gerät empfangen werden, die in der Anzeigeeinrichtung beispielsweise zur Konfiguration des Mehrfarben-Anzeigeelements verarbeitet und / oder über die Bus-System-Schnittstelle an einen Bus-Master (24) zur Verarbeitung übertragen werden können.

Ein kritischer Betriebszustand kann hierbei zum Beispiel eine Fehlfunktion eines Bauteils sein, oder wenn ein von einem Sensor erfasster Messwert außerhalb vorgegebener Parameter liegt. Ein kritischer Betriebszustand kann insbesondere auch gegeben sein, wenn ein Motorschutzschalter eine Überlast-Auslösung meldet.

Eine Ausführungsform der Erfindung betrifft nun eine Anzeigevorrichtung mit einer drahtlosen Schnittstelle, über die eine Kommunikation zwischen der Anzeigevorrichtung und einem zur Kommunikation mit der Anzeigevorrichtung konfigurierten Gerät ermöglicht wird, einer Schnittstelle zu einem Bus-System eines vernetzten Steuerungssystems, wobei die Anzeigevorrichtung als Bus-Slave in dem Bus-System konfiguriert ist, einem Mehrfarben-Anzeigeelement zum Anzeigen des Betriebszustands von mindestens einem Busteilnehmer, und einem Kontroller, der zum Steuern des Mehrfarben-Anzeigeelements und der Kommunikation über die drahtlose Schnittstelle und die Bus-System-Schnittstelle derart konfiguriert ist, dass ein kritischer Betriebszustand eines Busteilnehmers durch das Mehrfarben-Anzeigeelement entsprechend optisch signalisiert wird und dem kritischen Betriebszustand des Busteilnehmers entsprechende Daten über die drahtlose Schnittstelle an das zur Kommunikation mit der Anzeigevorrichtung konfigurierte Gerät zur Auswertung und Anzeige auf dem Gerät übertragen werden und von dem zur Kommunikation mit der Anzeigevorrichtung konfigurierten Gerät empfangene Befehle zur Konfiguration des Mehrfarben-Anzeigeelements verarbeitet und /oder über die Bus-System-Schnittstelle an einen Bus-Master (24) zur Verarbeitung übertragen werden. Das Bus-System kann insbesondere auf der SmartWire-DT®-Technologie der Anmelderin basieren, ein Feldbus-Bus nach dem Standard IEC 61158 sein oder durch ein Industrial Ethernet implementiert sein.

Der Kontroller kann konfiguriert sein, um Daten von mindestens einem Busteilnehmer über den Bus des Bus-Systems zu empfangen und über die drahtlose Schnittstelle an ein zur Kommunikation mit der Anzeigevorrichtung konfiguriertes Gerät zu übertragen.

Der Kontroller kann zudem konfiguriert sein, um Daten von einer als Bus-Master konfigurierten Steuerungseinheit des vernetzten Steuerungssystems über den Bus des Bus-Systems zu empfangen und über die drahtlose Schnittstelle an ein zur Kommunikation mit der Anzeigevorrichtung konfiguriertes Gerät zu übertragen.

Die Anzeigevorrichtung kann ein manuelles Betätigungselement aufweisen, das mit dem Kontroller verbunden ist und bei dessen Betätigung der Kontroller ein Flag setzt, das von einem Bus-Master ausgewertet werden kann, und/oder eine programmierte Funktion ausführt.

Die drahtlose Schnittstelle kann ein Funkmodul sein, das in das Betätigungselement zusammen mit dem Mehrfarben-Anzeigeelement integriert ist. Das Funkmodul kann konfiguriert sein, Daten gemäß einem Standard wie IEEE 802.15.1 (Bluetooth®, insbesondere Bluetooth® Low Energy), IEEE 802.11 (Wireless Local Area Network - WLAN), ISO 14443, 18092, 21481 ECMA 340, 352, 356, 362, ETSI TS 102 190 (Near Field Communication - NFC) zu übertragen.

Die Anzeigevorrichtung kann insbesondere als Modbus® RTU-Slave oder als CANopen®-Slave konfiguriert sein. Hierbei kann der Kontroller programmtechnisch derart konfiguriert sein, dass er Datenobjekte aufweist, die durch eine entsprechende Programmierung des vernetzten Steuerungssystems über das Bus-System beschrieben werden können, und dass er die beschriebenen Datenobjekte über die drahtlose Schnittstelle an ein zur Kommunikation mit der Anzeigevorrichtung konfiguriertes Gerät überträgt.

Eine weitere Ausführungsform der Erfindung betrifft ein Kommunikationsgerät mit einer drahtlosen Schnittstelle, das einen Prozessor aufweist, der programmtechnisch derart konfiguriert ist, dass das Kommunikationsgerät über die drahtlose Schnittstelle mit einer Anzeigevorrichtung nach der Erfindung und wie hierin beschreiben kommunizieren und Daten von der Anzeigevorrichtung empfangen und auf einem Bildschirm anzeigen kann. Das kann Kommunikationsgeräte insbesondere ein tragbarer Computer, ein Tablet-PC, ein Mobiltelefon, ein Smartphone, ein PDA (Personal Digital Assistant) oder eine Datenbrille sein.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

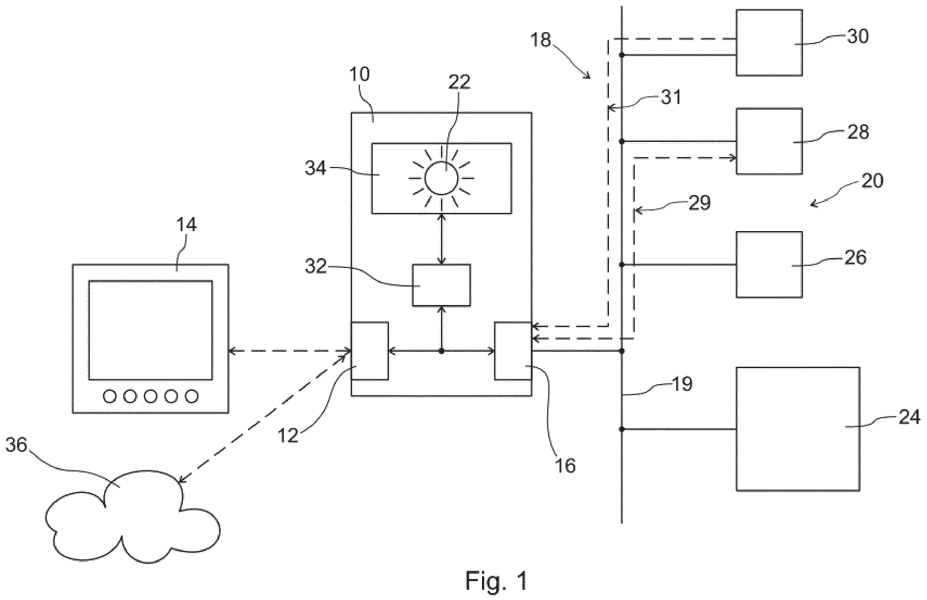

Die Zeichnungen zeigen in
Fig. 1 ein Blockschaltbild eines vernetzten Steuerungssystems mit einer Anzeigevorrichtung nach der Erfindung.

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen.

Fig. 1 zeigt den Einsatz der erfindungsgemäßen Anzeigevorrichtung 10 in einem vernetzten Steuerungssystem 20 zur Erweiterung der Anzeigeoptionen über den Betriebszustand der Elemente des vernetzten Steuerungssystems 20.

Die Anzeigevorrichtung 10 ist als Bus-Slave-Teilnehmer mit einem Multi-Color-Indicator (MCI) in Form einer mehrfarbigen Leuchtdiode 22 implementiert. Als Kommunikationsschnittstellen weist der MCI-Bus-Slave 10 ein Funkmodul 12 und eine drahtgebundene Bus-Schnittstelle 16 auf. Anstelle eines Funkmoduls kann auch ein anderes drahtloses Kommunikationsmodul eingesetzt werden, beispielsweise ein Infrarot-Kommunikationsmodul oder ein zur Datenübertragung per gepulstem Licht ausgebildetes Modul.

Das Funkmodul 12 kann zur Datenkommunikation gemäß verschiedener Funkübertragungsstandards eingerichtet sein, wie beispielsweise IEEE 802.15.1 (Bluetooth®, insbesondere Bluetooth® Low Energy), IEEE 802.11 (Wireless Local Area Network - WLAN), ISO 14443, 18092, 21481 ECMA 340, 352, 356, 362, ETSI TS 102 190 (Near Field Communication - NFC). Selbstverständlich sind auch andere Funkübertragungsstandards möglich, insbesondere Hersteller-eigene oder Mobilfunk-Standards.

Die drahtgebundene Bus-Schnittstelle 16 kann insbesondere zur Datenkommunikation gemäß dem Modbus®- oder CANopen®-Standard eingerichtet sein. Selbstverständlich sind auch andere Standards für eine Datenkommunikation über Busse, insbesondere Feldbusse, möglich, beispielsweise Hersteller-eigene Standards.

Die Steuerung der Datenübertragung über das Funkmodul 12 und die Bus-Schnittstelle 16 sowie der mehrfarbigen Leuchtdiode 22 erfolgt durch einen Kontroller 32 des MCI-Bus-Slave 10, der durch eine in einem Speicher des Kontrollers 32 angelegten Firmware entsprechend konfiguriert ist.

Die mehrfarbige Leuchtdiode 22 dient mit ihrer Farbanzeige als Signalisierung von wichtigen und binären Informationen von Elementen des vernetzten Steuerungssystems 20. Komplexere Informationen wie Messwerte können von dem MCI-Bus-Slave 10 über das Funkmodul 12 per Datenkommunikation an sein weiteres Gerät wie einen Tablet-PC 14 übertragen werden, der ebenfalls ein Funkmodul aufweist und über eine Funkverbindung, beispielsweise eine Bluetooth®-Kopplung mit dem MCI-Bus-Slave 10 datenkommunikationsmäßig verbunden ist. Im Folgenden wird als Kommunikationspartner des MCI-Bus-Slave 10 der Tablet-PC 14 genannt, obwohl selbstverständlich auch die eingangs bereits erwähnten weiteren Geräte als Kommunikationspartner sowie prinzipiell jedes Datenverarbeitungsgerät mit Funkmodul verwendet werden können.

Der MCI-Bus-Slave 10 weist weiterhin eine Taste 34 auf, über die beispielsweise der Kontroller 32 zum Ausführen bestimmter Aktionen aktiviert werden kann. Beispielsweise kann der Kontroller 32 bei Betätigung der Taste 34 ein Flag setzen, das von einem Bus-Master des vernetzten Steuerungssystems 20 ausgewertet werden kann, und/oder der Kontroller 32 kann bei Betätigen der Taste 34 eine programmierte Funktion ausführen, wie beispielsweise das Funkmodul 12 zu (de)aktivieren, die mehrfarbige Leuchtdiode 22 abzuschalten oder in einen bestimmten Zustand zu schalten oder den MCI-Bus-Slave 10 in einen bestimmten Betriebsmodus zu schaltet wie beispielsweise Anzeige des generellen Betriebszustands des vernetzten Steuerungssystems 20 (siehe auch unten). Die mehrfarbige Leuchtdiode 22 kann in die Taste 34 integriert sein, ebenso wie das Funkmodul 12.

Wie in Fig. 1 gezeigt ist der MCI-Bus-Slave 10 über die Bus-Schnittstelle 16 an den Bus 19 eines Bus-Systems 18 angeschlossen. An den Bus 19 sind ferner eine als Bus-Master betriebene zentrale Steuereinheit 24, beispielsweise ein easy800 Steuerrelais der Eaton Industries GmbH, ein Leistungsschalter 26, ein Motor-Starter 28 und ein Motorschutzschalter 30 angeschlossen. Die Vorrichtungen 26, 28 und 30 werden im Bus-System 18 wie die Vorrichtung 10 jeweils als Bus-Slave betrieben, wodurch sie den Datenverkehr des Bus-Systems 18 verfolgen können und an sie adressierte Befehle von der zentralen Steuereinheit 24 empfangen können sowie Daten auf Anforderung von der zentralen Steuereinheit 24 übertragen können.

Die zentrale Steuereinheit 24 kann als Master jeden an das Bus-System 18 angeschlossenen Busteilnehmer, der als Slave betrieben wird, ansprechen, beispielsweise um die Betriebszustände des Leistungsschalters 26, des Motor-Starters 28 und des Motorschutzschalters 30 abzufragen. Wird ein kritischer Betriebszustand signalisiert, beispielsweise wenn der Motorschutzschalter eine Überlast-Auslösung meldet, kann der MCI-Bus-Slave 10 diesen Zustand über die mehrfarbige Leuchtdiode 22 signalisieren, indem der Slave 10 entsprechende Alarmmeldedaten des Motorschutzschalters 30 über den Bus 19 empfängt. Eine solche Signalisierung kann auch von der zentralen Steuereinheit 24 angestoßen werden, indem diese einen entsprechenden Befehl an den MCI-Bus-Slave 10 adressiert. Der kritische Betriebszustand des Motorschutzschalters 30 wird dann signalisiert, indem der Kontroller 32 die mehrfarbige Leuchtdiode 22 so ansteuert, dass entsprechende Farb- und/oder Blinkmuster von der Leuchtdiode erzeugt werden, die diesen kritischen Betriebszustand optisch signalisieren.

Der Kontroller 32 kann die Alarmmeldedaten 31 auch über das Funkmodul 12 an den Tablet-PC 14 übertragen, der mit einem entsprechenden Programm die Daten auswerten und anzeigen kann.

Durch die erweiterten Möglichkeiten der Informationsdarstellung mit dem MCI-Bus-Slave 10 können nicht nur kritische Betriebszustände signalisiert werden, sondern auch Statusdaten der zentralen Steuereinheit 24 und der anderen Busteilnehmer 26, 28 und 30 über die Bus-Schnittstelle 16 empfangen, vom Kontroller 32 aufbereitet und über das Funkmodul 12 an den Tablet-PC 14 übertragen werden, der diese Daten durch eine entsprechendes Programm visualisieren kann. Hierzu kann der Kontroller 32 beispielsweise über die Bus-Schnittstelle 16 den Datentransfer auf dem Bus 19 überwachen, und empfangene Statusdaten von anderen Busteilnehmern aufbereiten und an den Tablet-PC 14 zur Visualisierung übertragen. Beispielsweise können Stromwert-Daten 29 des Motor-Starters 28 über die Bus-Schnittstelle 16 empfangen, vom Kontroller 32 aufbereitet und über das Funkmodul 12 an den Tablet-PC 14 zur Anzeige übertragen werden.

Weiterhin kann vorgesehen sein, dass Befehle vom Tablet-PC 14 an den MCI-Bus-Slave 10 übertragen werden. Die über das Funkmodul 12 des MCI-Bus-Slave 10 empfangenen Befehle können direkt vom Kontroller 32 verarbeitet werden und beispielsweise zur Konfiguration des MCI-Bus-Slave 10 dienen, wie z.B. zur Konfiguration der mehrfarbigen Leuchtdiode 22 über den Kontroller 32, und/oder die empfangenen Befehle können vom Kontroller 32 über die Bus-Schnittstelle 16 und den Bus 19 des Bus-Systems 18 an den Bus-Master 24 übertragen werden, der sie verarbeitet, beispielsweise Betriebsparameter der Bus-Teilnehmer 26, 28, 30 setzt und/oder verändert.

Der MCI-Bus-Slave 10 kann auch durch eine entsprechende Konfiguration des Kontrollers 32 derart eingerichtet sein, dass er über die mehrfarbige Leuchtdiode 22 und/oder das Funkmodul 12 und den Tablet-PC 14 den generellen Betriebszustand des vernetzten Steuerungssystems 20 anzeigt, wodurch beispielsweise eine optische Anzeige an der zentralen Steuereinheit nicht mehr benötigt wird. Als generelle Betriebszustände können beispielsweise "SPS Run", "SPS Stopp", "SPS System-Error" und "SPS Maintenance" angezeigt werden, wenn das vernetzte Steuerungssystem eine SPS (Speicherprogrammierbare Steuerung) ist.

Der MCI-Bus-Slave 10 kann auch Modbus® RTU-Slave oder als CANopen®-Slave konfiguriert sein und hierzu entsprechende Datenobjekte aufweisen, die durch eine entsprechende Programmierung einer SPS des vernetzten Steuerungssystems 20 beschrieben und über das Funkmodul 12 vom MCI-Bus-Slave 10 an den Tablet-PC 14 zur Anzeige übertragen werden können.

In einer weiteren Ausgestaltung kann der MCI-Bus-Slave 10 als Client eines Funknetzwerks betrieben werden und hierzu insbesondere mit einem Funk-Zugangspunkt eines Routers eines Datennetzwerks verbunden sein. Dadurch wird prinzipiell ein Zugang von entsprechend konfigurierten Clients des Datennetzwerks zum MCI-Bus-Slave 10 ermöglicht, so dass auch ein räumlich weit vom MCI-Bus-Slave 10 entfernter Client, wie ein mit dem Datennetzwerk verbundener Überwachungs-Computer in einem Leitstand Daten von den Bus-Teilnehmern 26, 28, 30 über den MCI-Bus-Slave 10 empfangen und visualisieren und ggf. auch Befehle an diese Bus-Teilnehmer über den MCI-Bus-Slave 10 und den Bus-Master 24 übermitteln kann. In diesem Fall ist nicht nur ein Punkt-zu-Punkt-Kommunikation wie zwischen dem Tablet-PC 14 und dem MCI-Bus-Slave 10, sondern eine Mehrpunkt-zu-Punkt-Kommunikation von jedem Client des Datennetzwerks mit dem MCI-Bus-Slave 10 möglich, wodurch der Aktionsradius wesentlich vergrößert werden kann. In Fig. 1 ist diese Möglichkeit durch die Verbindung zwischen dem Funkmodul 12 des MCI-Bus-Slave 10 und dem Datennetzwerk 36 gezeigt.

Durch die vorliegende Erfindung wird eine zum Signalisierung von Betriebszuständen von anderen Geräten vorgesehene Anzeigevorrichtung derart weitergebildet, dass die beschränkten Signalisierungsmöglichkeiten einer bisher durch eine mehrfarbige Leuchtdiode implementierte MCI erweitert werden, indem ein zur Kommunikation mit der Anzeigevorrichtung konfiguriertes Gerät wie ein mobiler Computer zur Anzeige von weiteren Informationen eingesetzt werden kann. Hierzu ist die Anzeigevorrichtung erfindungsgemäß insbesondere zum Einsatz in einem vernetzten Steuerungssystem als Bus-Slave konfiguriert und mit einer drahtlosen Schnittstelle zum Übertragen von zusätzlichen Informationen des vernetzten Steuerungssystems ausgestattet.

### Bezugszeichen

- 10: MCI-Bus-Slave
- 12: Funkmodul
- 14: Tablet-PC
- 16: drahtgebundene Bus-Schnittstelle
- 18: Bus-System
- 19: Bus
- 20: vernetztes Steuerungs system
- 22: mehrfarbige Leuchtdiode
- 24: zentrale Steuereinheit (Bus-Master)
- 26: Leistungsschalter
- 28: Motor-Starter
- 29: Stromwert-Daten des Motor-Starters 28
- 30: Motorschutzschalter
- 31: Alarmmeldedaten des Motorschutzschalters 30
- 32: Kontroller
- 34: Taste
- 36: Datennetzwerk

## Patentansprüche

1. Anzeigevorrichtung (10) mit
einer drahtlosen Schnittstelle (12), über die eine Kommunikation zwischen der Anzeigevorrichtung und einem zur Kommunikation mit der Anzeigevorrichtung konfigurierten Gerät (14) ermöglicht wird,
einer Schnittstelle (16) zu einem Bus-System (18) eines vernetzten Steuerungssystems (20), wobei die Anzeigevorrichtung als Bus-Slave in dem Bus-System konfiguriert ist,
einem Mehrfarben-Anzeigeelement (22) zum Anzeigen des Betriebszustands von mindestens einem Busteilnehmer (24, 26, 28, 30), und
einem Kontroller (32), der zum Steuern des Mehrfarben-Anzeigeelements und der Kommunikation über die drahtlose Schnittstelle und die Bus-System-Schnittstelle konfiguriert ist,
**dadurch gekennzeichnet, dass**
der Kontroller (32) konfiguriert ist, Daten (29) von mindestens einem Busteilnehmer (28) über den Bus (19) des Bus-Systems (18) zu empfangen und über die drahtlose Schnittstelle (12) an ein zur Kommunikation mit der Anzeigevorrichtung konfiguriertes Gerät (14) zu übertragen.

2. Anzeigevorrichtung nach Anspruch 1, **dadurch gekennzeichnet, dass** der Kontroller (32) konfiguriert ist, Daten von einer als Bus-Master konfigurierten Steuerungseinheit (24) des vernetzten Steuerungssystems (20) über den Bus (19) des Bus-Systems (18) zu empfangen und über die drahtlose Schnittstelle (12) an ein zur Kommunikation mit der Anzeigevorrichtung konfiguriertes Gerät (14) zu übertragen.

3. Anzeigevorrichtung nach Anspruch 1 oder 2, **dadurch gekennzeichnet, dass** sie ein manuelles Betätigungselement (34) aufweist, das mit dem Kontroller (32) verbunden ist und bei dessen Betätigung der Kontroller ein Flag setzt, das von einem Bus-Master (24) ausgewertet werden kann, und/oder eine programmierte Funktion ausführt.

4. Anzeigevorrichtung nach Anspruch 3, **dadurch gekennzeichnet, dass** die drahtlose Schnittstelle (12) ein Funkmodul ist, das in das Betätigungselement zusammen mit dem Mehrfarben-Anzeigeelement (22) integriert ist.

5. Anzeigevorrichtung nach einem der vorhergehenden Ansprüche, **dadurch gekennzeichnet, dass** sie als Modbus® RTU-Slave oder als CANopen®-Slave konfiguriert ist.

6. Anzeigevorrichtung nach Anspruch 5, **dadurch gekennzeichnet, dass** der Kontroller (32) programmtechnisch derart konfiguriert ist, dass er Datenobjekte aufweist, die durch eine entsprechende Programmierung des vernetzten Steuerungssystems (20) über das Bus-System (18) beschrieben werden können, und dass er die beschriebenen Datenobjekte über die drahtlose Schnittstelle (12) an ein zur Kommunikation mit der Anzeigevorrichtung konfiguriertes Gerät (14) überträgt.

7. System umfassend eine Anzeigevorrichtung (10) nach einem der vorangehenden Ansprüche und ein Kommunikationsgerät (14) mit einer drahtlosen Schnittstelle, das einen Prozessor aufweist, der programmtechnisch derart konfiguriert ist, dass das Kommunikationsgerät über die drahtlose Schnittstelle mit der Anzeigevorrichtung kommunizieren und Daten von der Anzeigevorrichtung empfangen und auf einem Bildschirm anzeigen kann.

## Claims

1. Display device (10) comprising
a wireless interface (12), via which communication between the display device and a device (14) configured for communication with the display device is made possible,
an interface (16) to a bus system (18) of a networked control system (20), wherein the display device is configured as a bus slave in the bus system,
a multicolour display element (22) for indicating the operating status of at least one bus subscriber (24, 26, 28, 30), and
a controller (32), configured to control the multi-colour display element and communicate via the wireless interface and the bus system interface,
**characterised in that**
the controller (32) is configured to receive data (29) from at least one bus subscriber (28) via the bus (19) of the bus system (18) and to transmit it via the wireless interface (12) to a device (14) configured for communication with the display device.

2. Display device according to Claim 1, **characterised in that** the controller (32) is configured to receive data from a control unit (24) configured as the bus master of the networked control system (20) via the bus (19) of the bus system (18) and to transmit it via the wireless interface (12) to a device (14) configured for communication with the display device.

3. Display device according to Claim 1 or 2, **characterised in that** it includes a manual actuating element (34), which is connected to the controller (32) and which, when actuated, results in the controller setting a flag, which can be interpreted by a bus master (24), and/or executes a programmed function.

4. Display device according to Claim 3, **characterised in that** the wireless interface (12) is a wireless module, which is integrated into the manual actuating element together with the multi-colour display element (22).

5. Display device according to any one of the preceding claims, **characterised in that** it is configured as a Modbus® RTU slave or as a CANopen® slave.

6. Display device according to Claim 5, **characterised in that** the controller (32) is configured by programming such that it includes the data objects, which can be described by appropriate programming of the networked control system (20) via the bus system (18), and such that it transmits the data objects described via the wireless interface (12) to a device (14) configured for communication with the display device.

7. System comprising a display device (10) according to any one of the preceding claims and a communication device (14) with a wireless interface, which includes a processor, which is configured by programming such that the communication device is able to communicate via the wireless interface with the display device and to receive data from the display device and display it on a screen.

## Revendications

1. Dispositif d'affichage (10) avec
une interface sans fil (12), par le biais de laquelle une communication entre le dispositif d'affichage et un appareil (14) configuré pour la communication avec le dispositif d'affichage est rendue possible,
une interface (16) avec un système de bus (18) d'un système de commande en réseau (20), dans lequel le dispositif d'affichage est configuré en tant qu'esclave du bus dans le système de bus,
un élément d'affichage multicolore (22) pour l'affichage de l'état de fonctionnement d'au moins un utilisateur du bus (24, 26, 28, 30), et
un contrôleur (32), qui est configuré pour la commande de l'élément d'affichage multicolore et la communication par le biais de l'interface sans fil et de l'interface du système de bus,
**caractérisé en ce que**
le contrôleur (32) est configuré pour recevoir des données (29) depuis au moins un utilisateur du bus (28) par le biais du bus (19) du système de bus (18) et pour en transmettre par le biais de l'interface sans fil (12) à un appareil (14) configuré pour la communication avec le dispositif d'affichage.

2. Dispositif d'affichage selon la revendication 1, **caractérisé en ce que** le contrôleur (32) est configuré pour recevoir des données depuis une unité de commande (24), configurée en tant que maître du bus, du système de commande en réseau (20) par le biais du bus (19) du système de bus (18) et pour en transmettre par le biais de l'interface sans fil (12) à un appareil (14) configuré pour la communication avec le dispositif d'affichage.

3. Dispositif d'affichage selon la revendication 1 ou 2, **caractérisé en ce qu'**il comprend un élément d'actionnement manuel (34) qui est relié au contrôleur (32) et lors de l'actionnement duquel le contrôleur active un drapeau, qui peut être évalué par un maître du bus (24), et/ou exécute une fonction programmée.

4. Dispositif d'affichage selon la revendication 3, **caractérisé en ce que** l'interface sans fil (12) est un module radio qui est intégré dans l'élément d'actionnement conjointement avec l'élément d'affichage multicolore (22).

5. Dispositif d'affichage selon l'une quelconque des revendications précédentes, **caractérisé en ce qu'**il est configuré en tant qu'esclave RTU de Modbus® ou esclave de CANopen®.

6. Dispositif d'affichage selon la revendication 5, **caractérisé en ce que** le contrôleur (32) est configuré selon une technique de programmation d'une manière telle qu'il comprend des objets de données qui peuvent être décrits par une programmation correspondante du système de commande en réseau (20) par le biais du système de bus (18), et ce qu'il transmet les objets de données décrits par le biais de l'interface sans fil (12) à un appareil (14) configuré pour la communication avec le dispositif d'affichage.

7. Système comportant un dispositif d'affichage (10) selon l'une quelconque des revendications précédentes et un appareil de communication (14) avec une interface sans fil, qui comprend un processeur qui est configuré selon une technique de programmation d'une manière telle que l'appareil de communication peut communiquer par le biais de l'interface sans fil avec le dispositif d'affichage et recevoir des données depuis le dispositif d'affichage et les afficher sur un écran.
